# EUROPEAN PATENT SPECIFICATION

(11) **EP 4 000 879 B1**
(45) Date of publication and mention of the grant of the patent: **11.03.2026**
(21) Application number: 21209973.3
(22) Date of filing: 23.11.2021
(51) Int. Cl.: B29C 67/00, B29L 7/00, B26F 1/18

(54) **FILM FOR PROVIDING PACKAGING MATERIALS AND METHOD FOR PROVIDING IT**
FOLIE ZUR BEREITSTELLUNG VON VERPACKUNGSMATERIALIEN UND VERFAHREN ZUR BEREITSTELLUNG DAVON
FILM DE FOURNITURE DE MATÉRIAUX D'EMBALLAGE ET SON PROCÉDÉ DE FOURNITURE

(30) Priority: 24.11.2020 IT 202000028139
(43) Date of publication of application: 25.05.2022
(73) Proprietor: Galloplastik S.r.l., 30015 Chioggia (VE) (IT)
(72) Inventor: TIOZZO GOBETTO, Eugenio, 30015 Chioggia VE (IT)
(74) Representative: Modiano, Micaela Nadia

(56) References cited:
- EP-A1- 2 589 540
- WO-A1-2017/081000
- GB-A- 1 304 939

## Description

The present invention relates to a film for providing packaging materials.

The invention also relates to a method for providing such a film.

Nowadays perforated films are known and are very widespread; they are usually made of polyethylene and are used for wrapping individual or clustered products arranged on pallets.

The film, in addition to protecting the products, when used to wrap the goods on the pallets, also has the function of compacting them, preventing the goods, especially when stacked, from moving and falling off the pallet. WO2017081000 discloses such plastic films for packaging.

Many types of products, when they are palletized, can exhibit problems of stability owing to their shape and their weight, and for this reason often abundant wrapping is employed, which is obtained by winding the products with many layers of film, or a film of greater thickness is used.

Among the extensible films known today are perforated and reinforced films, which are used for example for wrapping boxes, stacked on pallets, containing products that require a change of air in order to best maintain their qualities, such as for example fruit and vegetable products or products that have undergone pasteurization and which therefore are subject to the release of water vapor which must not be allowed to accumulate and form condensation.

The perforated films known today are generally constituted by a film made of longitudinally extended plastic material, optionally provided with longitudinal reinforcement elements, which are parallel and also extensible, and holes or cuts for ventilation between two adjacent reinforcement elements.

Perforated films exist on the market which have no reinforcement, and which are provided with holes using heat, via irradiation or die-cutting, but such methods for providing the holes do not allow the film to be stretched transversely.

Furthermore, die-punching results in discarded material while irradiation dictates a slow process, especially when providing holes of considerable dimensions, as well as the buildup of material at the edges of the holes with consequent considerable thickening of the film at certain points.

Perforated and reinforced films are often subjected to a longitudinal stretching operation at the same time as they are used, i.e. at the time of unwinding the reel in order to wind it around a pallet or another group of products.

This operation increases its tensile strength in the same direction as the stretching.

In other cases, they are subjected to a longitudinal stretching operation in a step of production, also known as pre-stretching, before being finally wound on a reel.

The presence of reinforcement elements is necessary since the perforation of the film results in the generation, at the holes, of imperfections that represent stress raisers for tearing during the stretching of the film, and it is also beneficial for use on pointed objects, in order to prevent the propagation of the cuts that such objects could cause.

Nowadays, in order to provide perforated and reinforced films, usually holes of small dimensions, at most 9-10 mm, are made on a base sheet of film using heat, and these are then enlarged using irradiation, which generates a thickening of the edges of the holes.

Then reinforcements are provided directly on the base sheet by deforming continuously and then compressing some regions in the longitudinal direction of the base sheet, or by applying reinforcement strips, made separately.

Such conventional techniques have a number of drawbacks.

First of all, by making holes by heat and then widening them with irradiation, holes of small dimensions are obtained which do not always ensure an adequate transpiration of the packaged products.

Furthermore, hot perforation of the base sheet can result in the development of holes with burring, owing to a hot component making contact with the film, with consequent reduced tensile strength during stretching and from which cuts may propagate.

Also, by providing reinforcements via the deformation and compression of the base sheet results in a reduction of the dimension of the sheet in the transverse direction.

In the present description, the expression "transverse direction" means the direction perpendicular to the longitudinal direction and lying on the same plane of arrangement as the base sheet.

In the present description, the expression "longitudinal direction" means the direction of unreeling/reeling of the base sheet or film from/onto a spool.

Also, the application on the base sheet of separately-made reinforcements results in a considerable consumption of material and operations to produce the film that are long and inconvenient, determined by the need to carry out separate different operations such as providing the holes on the base sheet, providing the reinforcements, coupling the perforated sheet with the reinforcements, and so on.

The aim of the present invention is to provide a film for providing packaging materials and a method for providing it that are capable of improving the known art in one or more of the above mentioned aspects.

Within this aim, an object of the invention is to provide a film for providing packaging materials that has larger holes, before stretching, than those of conventional films, without burring and without, or with reduced, buildup of material on the edges of the holes.

Another object of the invention is to provide a film for providing packaging materials with reinforced holes that can withstand traction in a longitudinal direction.

A further object of the invention is to provide a film for providing packaging materials that has reinforcements that are provided with the same base sheet and the transverse dimension of which is not reduced as a consequence of providing the reinforcements, as with longitudinal folding only.

Another object of the invention is to provide a method for providing a film for providing packaging materials, according to the invention, that makes it possible to achieve the above objects.

A still further object of the present invention sets out to overcome the drawbacks of the background art in a manner that is alternative to any existing solutions.

Another object of the invention is to provide a film for providing packaging materials that is highly reliable, easy to implement and of low cost.

This aim and these and other objects which will become better apparent hereinafter are achieved by a film for providing packaging materials as defined in claim 1.

This aim and these and other objects which will become better evident hereinafter are also achieved by a method for providing a film as defined in claim 6 or claim 9.

Further characteristics and advantages of the invention will become better apparent from the detailed description that follows of a preferred, but not exclusive, embodiment of the film for providing packaging materials and of the method for providing it, according to the invention, which are illustrated by way of non-limiting example in the accompanying drawings, wherein:
- Figure 1 is a schematic view of a film for providing packaging materials, according to the invention;
- Figure 2 is a schematic view of a first step of the method for providing the film of Figure 1;
- Figure 3 is a view of a second step of the method for providing the film of Figure 1;
- Figure 4 is a schematic view of a third step of the method for providing the film of Figure 1;
- Figure 5 is a schematic view of the method for providing the film of Figure 1.

With reference to the figures, a film for the production of packaging materials according to the invention is that generally designated by the reference numeral 10.

The film 10 comprises a base sheet 11.

Such base sheet 11 is made of plastic material, for example polyethylene.

Such base sheet 11 is provided with:
- a plurality of holes 12, which are aligned along lines which are parallel to the axis X of longitudinal extension of the base sheet 11,
- a plurality of longitudinally-extended reinforcements 13 which are also parallel to the axis X of longitudinal extension of the base sheet 11.

One of the peculiarities of the invention consists in that the holes 12 have uniform perimetric edges.

In the present description, the expression "uniform perimetric edges" means that the perimetric edges do not have burring.

Such holes 12 have a substantially circular and/or oval profile.

In another embodiment, not shown in the figures, the holes 12 are aligned along lines that are parallel to the axis of extension of the base sheet, but offset between one line and the next, so as to obtain a sort of checkerboard pattern of the holes.

Another one of the peculiarities of the invention consists in that the reinforcements 13 are provided directly with the base sheet 11, by deforming and folding onto themselves some regions of the base sheet 11 and the latter substantially maintains its transverse dimension even after providing the reinforcements 13.

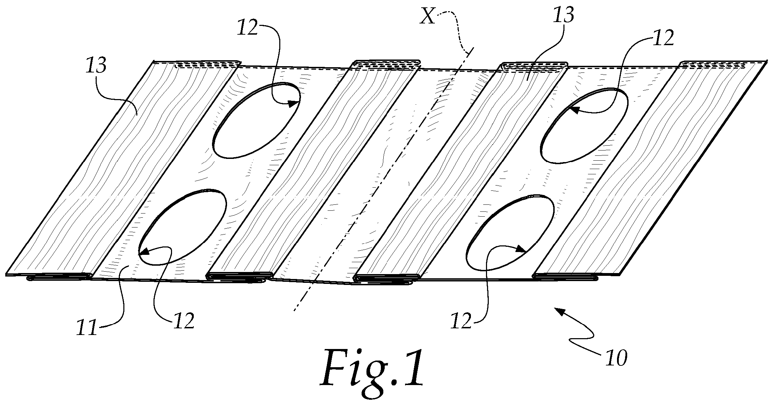

Figure 1 shows the reinforcements 13 with a transverse dimension comparable to the transverse dimension of the holes 12 in order to facilitate to understand the method for providing them.

However, in other embodiments, not shown in the figures, the reinforcements 13 are preferably thin and have a transverse dimension that is reduced and/or is equal to a submultiple of the transverse dimension of the holes 12.

In other, further, variations of embodiment, not shown in the figures, the reinforcements 13 have a transverse dimension that is greater than the transverse dimension of the holes 12.

According to requirements, by conveniently conveying air toward the material, as explained below, or with adapted conveyors, it is possible to provide one or more reinforcements 13 on the base sheet 11.

The characteristics of the film 10 are determined by the method for providing it.

In particular, one of the peculiarities of the invention is the use of heat by convection.

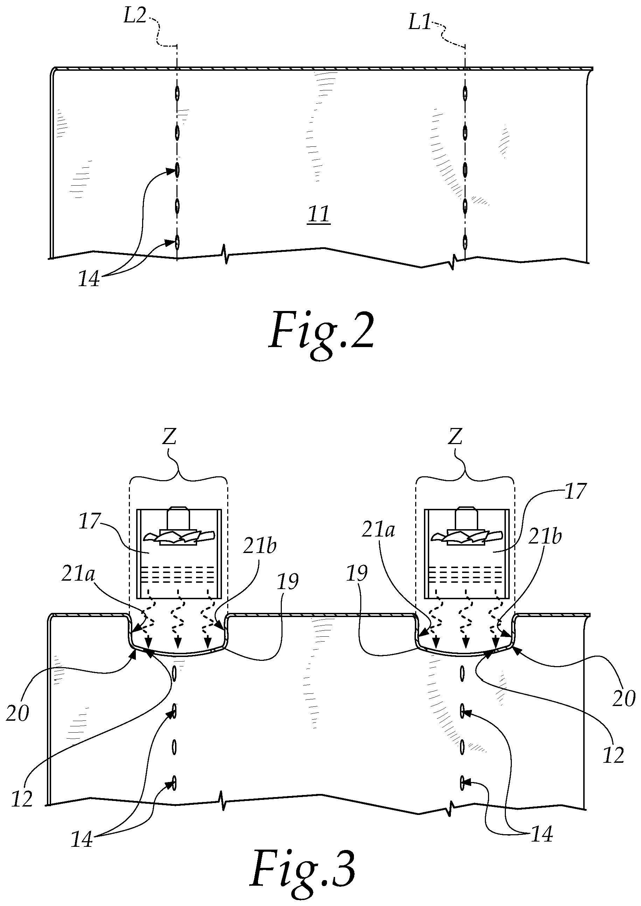

With particular reference to Figure 2, the first step of the method for providing the film 10 consists of providing longitudinal cuts and/or holes 14 without burring on the base sheet 11.

In embodiments, not shown in the figures, the cuts and/or holes can have any shape and be of any kind; they can, for example, be constituted by incisions or die-cuts with or without the removal of material, holes made using heat and with an edge thickened or otherwise, etc.

These cuts 14 are carried out for example using retractable punch dies, not shown in the figures, regularly along one or more lines L1, L2.

Such cuts 14 are executed cold, i.e. at a temperature substantially equal to ambient temperature, thus avoiding the problems explained above deriving from the contact of the film with a hot component, which could lead to the development of burring.

Then the base sheet 11 with the cuts 14 slides in the direction of one or more blowers 17 which blow hot air in a constant and continuous manner, in the direction of the base sheet 11, at least in a delimited region Z of the base sheet 11, as shown schematically in Figure 3.

The hot air that reaches the base sheet 11 has a temperature associated with the pressure with which it is thrust against the latter.

For example, the hot air is blown at a pressure between 0 mbar and 950 mbar and at a flow rate between 5 m³/h and 1250 m³/h for each conveyor (therefore for each line L1, L2 of holes) which is subsequently heated to a temperature comprised between 80°C and 450°C.

The above value ranges are combined together and vary according to various factors such as, for example, the external temperature, the thickness of the material, the sliding speed of the base sheet, etc.

In particular, the lines L1, L2 of extension of the cuts 14 are arranged at these delimited regions Z.

The delimited regions Z are deformed as an effect of the heat owing to the convection, while the regions adjacent thereto, which are cold, remain substantially unaltered.

In another embodiment, not shown in the figures, all of the base sheet 11, conveniently held proximate to the cuts 14, is heated by convection and in such case there is a retraction of the material mainly at/proximate to the cuts 14.

The base sheet 11, with the cuts 14, slides for example by means of conveyors, not shown in the figures, and as it passes in front of the blowers 17 it is deformed by convection, owing to the hot air that exits from these blowers.

During the deformation by convection, the cuts 14 widen in a homogeneous manner until they become holes 12, of larger dimensions that similar holes provided by irradiation, and this enables the film 10 to be more breathable than a similar film with holes provided by irradiation, not least because it is possible to provide cuts 14 of the desired length.

Then, by virtue of the convection, the edges of the cuts 14 are deformed homogeneously and are strengthened, by widening and retracting, therefore without thickening the edges of the resultant holes 12, or with a minimal and localized thickening at some points of the resultant holes 12.

It should be noted that, by using convection to widen the edges of the cuts 14, which do not have burring, holes 12 are obtained with a considerable longitudinal robustness, which during use of the film 10 is the direction most stressed, not least owing to possible traction.

Also, the longitudinal cuts 14 are widened by the convection so as to form the holes 12 and, since they do not have burring, during the step of heating/deformation to provide the holes 12, their edges remain homogeneous and uniform without presenting stress raisers for breakage, in particular in the longitudinal direction, which is the direction stressed most during the use of the film 10.

It should also be noted that during the convection, a thermo-retraction occurs of the material in the region surrounding each cut 14, with consequent localized increase in thickness, while its edges, which determine the edges of the corresponding hole 12, do not have buildups of material that could increase their thickness, as would happen in heating by irradiation, or they have buildups of material that are in any case small.

In particular, on the edges of the holes 12 there is no buildup of material because, during the convection, the material surrounding the longitudinal cuts 14 thermo-retracts uniformly and the thickness is distributed substantially over all of the heated region.

This determines, effectively, a thickening of much of the region surrounding the holes 12 with consequent widespread reinforcement.

Furthermore, convection eliminates the risk of formation of fracture points of the film 10 that could arise at the start and end points of each cut 14, where the cut is irregular, and they take longer to heal if subjected to irradiation instead of convection.

As shown schematically in Figure 3, by virtue of the convection, the base sheet 11 is deformed, locally, at each delimited region Z, substantially forming bulges 19.

At each longitudinally-extended bulge 19, the base sheet 11 becomes locally thinner, while keeping its overall transverse dimension substantially unaltered.

Each bulge 19 is substantially U-shaped in transverse cross-section, with:
- a core 20, at which the holes 12 extend,
- two opposing wings 21a, 21b, which are substantially perpendicular to the core 20.

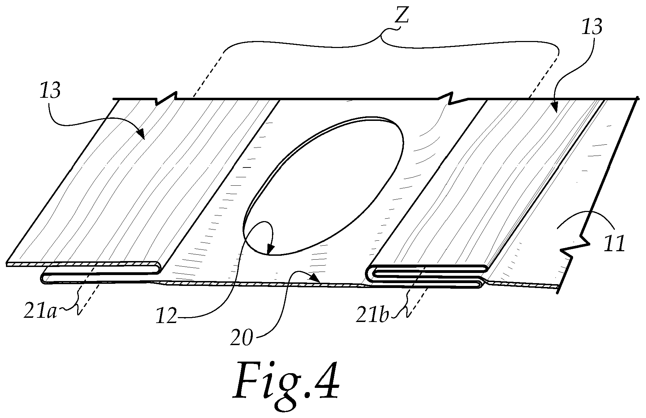

With particular reference to Figure 4, the reinforcements 13 are obtained by gathering and/or compressing and/or folding onto themselves the two wings 21a, 21b, and partly the core 20, of each bulge 19, for example through the use of adapted wheels and/or conveyors and/or heat sources and/or hot/cold air blowers, not shown in the figures, so as to return them substantially to the level of the base sheet 11 and coplanar therewith.

In this manner the perforated and reinforced film 10 is obtained.

The operation to gather and/or compress on themselves of the wings 21a, 21b, and partly the core 20, occurs for example by way of using two facing compression rollers, not shown in the figures, through which the deformed base sheet 11 slides after passing through the blowers 17.

It should be noted that, the gathering and/or the compression of the wings 21a, 21b, and partly of the core 20, immediately after the step of heating (and therefore while they are still hot) enables them to fuse and/or adhere very well to the base sheet 11, and they tend to come undone less than they would if they were gathered/compressed when cold.

A reinforcement 13 is substantially formed at each wing 21a, 21b.

It should be noted that the formation of the reinforcements 13, in the manner explained above, makes it possible to obtain reinforcements that have a considerable capacity for longitudinal stretching in that the material, during the step of providing the reinforcements 13, has not been stretched while orienting its molecules transversely, but has simply been thinned by virtue of the plastic deformation owing to the convection, thus maintaining the structure of the base sheet 11, as it was originally.

Furthermore, the film 10, according to the invention, maintains a good capacity for stretching in the transverse direction in that the film has been hot-deformed and has not been stretched while orienting the molecules in that direction.

It should also be noted that, with a similar process of formation of the reinforcements 13, the lengthened/deformed material is gathered locally by virtue of the convection, thus preventing the formation of creases which would result in weakened points of the film.

Also, it should be noted that, in a film according to the invention, such reinforcements 13 give better hold and robustness of the film with respect to a similar perforated film produced with a single base sheet, therefore for the same weight and thickness.

Such reinforcements 13 are preferably, but not exclusively, arranged proximate to the edges of the holes 12, with the result that, during the use of the film 10, the reinforcements are integral with them, increasing their robustness.

In practice the method for providing the film 10, according to the invention, consists of the following steps:
- providing a plurality of longitudinal cuts 14, without burring, on the base sheet 11 along one or more lines L1, L2,
- locally deforming the base sheet 11 with the cuts 14 by using one or more blowers 17 that blow hot air in the direction of the base sheet 11 in one or more delimited regions Z of the base sheet 11, with each line L1, L2 of cuts 14 arranged at one region of these regions Z, widening the cuts 14 homogeneously until the holes 12 are obtained,
- simultaneously, deforming the base sheet 11 at the regions Z, by virtue of the convection generated by the blowers 17, thus forming substantially at least the bulges 19, each one longitudinally extended at a region Z,
- providing the reinforcements 13 by gathering and/or compressing onto themselves the two wings 21a, 21b, and partly the core 20, of each bulge 19, so as to return them substantially to the level of the base sheet 11 and coplanar therewith.

It should be noted that the bulges 19 can also be gathered on one side only, or in several regions.

In another embodiment, not shown in the figures, the reinforcements are provided by folding/gathering a non-heated, or only partially heated, longitudinal portion of the base sheet.

Such folding/gathering occurs, for example, using wheels and/or conveyors that interact, effectively, with non-thinned portions of the base sheet.

In practice, the reinforcements are provided by folding/gathering portions of the base sheet outside of the regions Z deformed by the blowers 17.

In such embodiment the method consists of the steps of:
- providing a plurality of longitudinal cuts 14 on the base sheet 11 along at least one line L1, L2,
- locally deforming the base sheet 11 with the cuts 14, by convection, in at least one delimited region Z of the base sheet 11, with the at least one line L1, L2 arranged at the region Z, widening the cuts 14 until the holes 12 are obtained,
- providing the reinforcements 13 by folding/gathering a longitudinal portion of the base sheet 11 outside of the region Z.

This method makes it possible to obtain a reinforced film with a final width that is substantially unaltered with respect to the initial width.

In a further embodiment, not shown in the figures, the film according to the invention is not provided with holes, but only with a plurality of reinforcements, which are provided via the deformation of the base sheet by convection on delimited regions of the base sheet, possibly with the use of adapted conveyors and/or wheels to gather the bulges generated by localized convection.

It should be noted that it is also possible, with convection, to provide a film, according to the invention, that is reinforced but without holes.

In such case, the method is similar to the method described previously, except for providing the holes, and substantially consists of the steps of:
- locally deforming the base sheet by using one or more blowers that blow hot air in the direction of the base sheet in one or more delimited regions of the base sheet,
- simultaneously, deforming the base sheet at these delimited regions, by virtue of the convection generated by the blowers, thus forming substantially bulges, each one longitudinally extended at one of these delimited regions,
- providing the reinforcements by gathering and/or compressing onto themselves the two wings, and partly the core, of each bulge, so as to return them substantially to the level of the base sheet and coplanar therewith.

Similarly to the method described previously, each bulge is substantially U-shaped in transverse cross-section, with:
- a core,
- two opposing wings, which are substantially perpendicular to the core.

Furthermore, similarly to the method explained previously, with this method the base sheet maintains substantially its transverse dimension even after the reinforcements have been provided.

The result is a reinforced film that can be used as-is or which can be further processed and/or perforated, before its use.

Furthermore, it is possible to provide a film, with or without reinforcements obtained by convection, which in addition to the holes obtained by convection has reinforcements provided directly on the base sheet by deforming continuously and then compressing some regions in the longitudinal direction of the base sheet and/or by applying reinforcement strips, made separately.
In this manner a film is obtained that is reinforced even further.

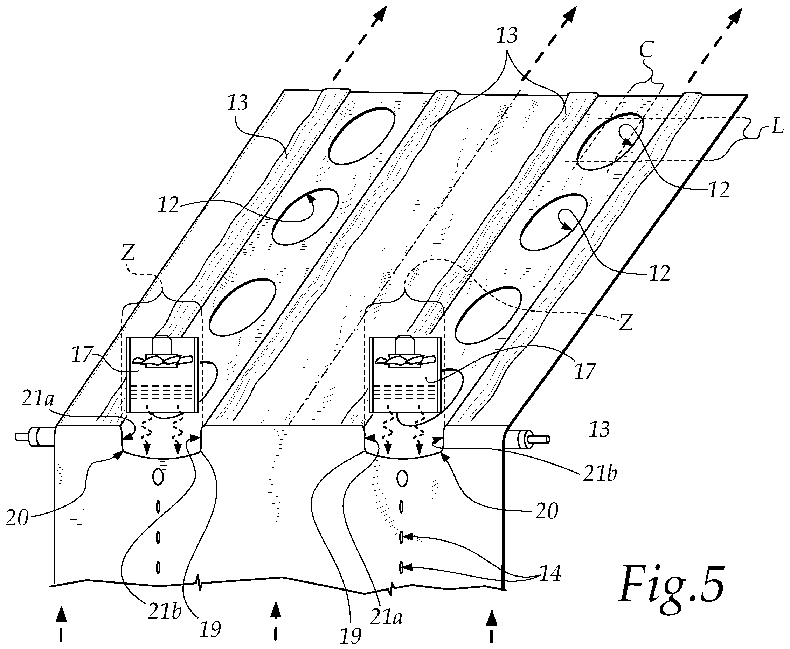

In Figure 5:
- the letter "c" identifies the curved portions of the edges of the holes 12, i.e. the ones directed toward the next holes 12 in the same line of holes,
- the letter "1" identifies the substantially longitudinal portions of the edges of the holes 12, comprised between two curved "c" portions of that hole 12.

It should be noted that, differently from a normal widening with heat of a hole, which causes the retraction and buildup of material proximate to and on its edges, considerably increasing its thickness, a method according to the invention, using bulges or using heating to form the reinforcements, by contrast enables:
- a decrease in the thickness of the curved portions c of the edges of the holes 12 which is substantially comprised between 5% and 90% with respect to the thickness of the starting base sheet 11,
- a variation of the thickness of the substantially longitudinal portions 1 of the edges of the holes 12 which is substantially between -50% and +200% with respect to the thickness of the starting base sheet 11.

Below the threshold of 5%, at the curved portions c, it is difficult to form reinforcements.

For example, taking a base sheet with an original thickness of 23 µm, the thickness of the edges of the holes 12 has an average value of approximately 20 µm with a deviation substantially of ± 60% with:
- the thickness of the curved portions c comprised between 7 µm and 19 µm,
- the thickness of the substantially longitudinal portions 1 comprised between 19 µm and 32 µm.

These proportions, which are given above by way of non-limiting example, can vary depending on:
- the width of the holes that it is desired to obtain,
- the thickness and the type of material of the starting base sheet.

In practice it has been found that the invention fully achieves the intended aim and objects by providing a film for providing packaging materials which has larger holes than those in conventional films, without burring.

With the invention a film for providing packaging materials has been devised with reinforced holes that can withstand traction in a longitudinal direction.

Furthermore, with the invention a film for providing packaging materials has been provided that has reinforcements made with the same base sheet and the transverse dimension of which is not reduced as a consequence of providing the reinforcements.

In addition, with the invention a method for providing a film for providing packaging materials has been devised that makes it possible to achieving the above mentioned objects.

It should also be noted that, with a method according to the invention, it is possible to provide a perforated and reinforced film using two simultaneous operations and, in particular, the convection determines simultaneously both the formation of the holes, by widening the cuts, and the formation of the reinforcements, by locally deforming some portions of the base sheet.

Furthermore, in a method according to the invention the same heat deriving from the convection is used to fuse/compact the reinforcements to the base sheet.

The invention thus conceived is susceptible of numerous modifications and variations, all of which are within the scope of the appended claims.

In practice the materials employed, provided they are compatible with the specific use, and the contingent dimensions and shapes, may be any according to requirements and to the state of the art.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A film (10) for providing packaging materials, which comprises a base sheet (11) provided with a plurality of holes (12), wherein said holes (12) have perimetric edges , said holes (12) being configured to be obtained via the use of hot air by convection on corresponding longitudinal cuts (14) wherein the perimetric edges of the holes (12) comprise curved portions and longitudinal portions positioned between the curved portions **characterized in that** the curved portions have a reduced thickness substantially comprised between 5% and 90% with respect to the thickness of the starting base sheet (11) and the longitudinal portions have a variation of the thickness substantially between -50% and +200% with respect to the thickness of the starting base sheet (11).

2. The film (10) according to claim 1, **characterized in that** said holes (12) are aligned along lines which are parallel to an axis (X) of longitudinal extension of said base sheet (11).

3. The film (10) according to claim 2, **characterized in that** it is provided with a plurality of longitudinally-extended reinforcements (13) which are parallel to said axis (X) of longitudinal extension of said base sheet (11).

4. The film according to claim 2, **characterized in that** said holes are offset between one of said lines and the next of said lines.

5. The film (10) according to claim 3, **characterized in that** said reinforcements (13) are configured to be obtained directly from said base sheet (11) by means of localized convection and subsequent gathering and/or compression of material.

6. A method for providing a film (10) comprising a base sheet (11) provided with a plurality of reinforcements (13) , wherein the method comprises the steps of:
- providing a plurality of longitudinal cuts (14) on said base sheet (11) along at least one line (L1, L2),
- locally deforming said base sheet (11) with said cuts (14), by convection, in at least one delimited region (Z) of said base sheet (11), with said at least one line (L1, L2) arranged at said at least one region (Z), widening said cuts (14) until said holes (12) are obtained, the method being **characterized by** the steps of
- deforming said base sheet (11) at said at least one region (Z), as an effect of said convection, thus forming substantially at least one bulge (19) which extends longitudinally at said at least one region (Z), said at least one bulge (19) being substantially U-shaped in transverse cross-section with:
- a core (20), at which said holes (12) extend,
- two opposing wings (21a, 21b), which are substantially perpendicular to said core (20), and
- providing said reinforcements (13) by gathering and/or compressing onto themselves said two wings (21a, 21b), and partly said core (20), of said at least one bulge (19), so as to return them substantially to the level of said base sheet (11) and coplanar therewith.

7. The method according to claim 6, **characterized in that**, at said at least one bulge (19), said base sheet (11) becomes locally thinner, while keeping its overall transverse dimension substantially unaltered.

8. The method according to claim 6, **characterized by** the step of:
providing said reinforcements (13) by folding/gathering a longitudinal portion of said base sheet (11) outside of said at least one region (Z).

9. A method for providing a film (10) comprising a base sheet (11) provided with a plurality of reinforcements (13), **characterized in that** it comprises the steps of:
- locally deforming said base sheet (11) by convection at least in a delimited region (Z) thereof,
- simultaneously, deforming said base sheet (11) at said at least one region (Z), as an effect of said convection, thus forming substantially at least one bulge (19) which extends longitudinally at said at least one region (Z), said at least one bulge (19) being substantially U-shaped in transverse cross-section with:
- a core (20),
- two opposing wings (21a, 21b), which are substantially perpendicular to said core (20),
- providing said reinforcements (13) by gathering and/or compressing and/or folding onto themselves said two wings (21a, 21b) and partly said core (20) of said at least one bulge (19), so as to return them substantially to the level of said base sheet (11) and coplanar therewith.

10. The method according to claim 9, **characterized in that**, at said at least one bulge (19), said base sheet (11) becomes locally thinner, while keeping its overall transverse dimension substantially unaltered.

11. The method for providing a film (10) according to one or more of claims 6 to 8, or according to claim 9, **characterized in that** it comprises a step of providing the reinforcements (13):
- directly on said base sheet (11), by deforming continuously and then compressing some regions (Z) in the longitudinal direction of said base sheet (11),
- and/or by applying reinforcement strips and/or filaments, which are provided separately.

## Patentansprüche

1. Eine Folie (10) zur Bereitstellung von Verpackungsmaterialien, die eine mit einer Vielzahl von Löchern (12) versehene Basisschicht (11) umfasst, wobei die Löcher (12) Umfangsränder haben, wobei die Löcher (12) ausgebildet sind, um mit Hilfe von Heißluft durch Konvektion an entsprechenden Längsschnitten (14) hergestellt zu werden, wobei die Umfangsränder der Löcher (12) gekrümmte Abschnitte und längliche Abschnitte umfassen, die zwischen den gekrümmten Abschnitten positioniert sind, **dadurch gekennzeichnet, dass** die gekrümmten Abschnitte eine verminderte Dicke haben, die im Wesentlichen zwischen 5% und 90% mit Bezug auf die Dicke der Ausgangs-Basisschicht (11) beträgt, und die länglichen Abschnitte eine Schwankung der Dicke im Wesentlichen zwischen -50% und +200% mit Bezug auf die Dicke der Ausgangs-Basisschicht (11) haben.

2. Die Folie (10) gemäß Anspruch 1, **dadurch gekennzeichnet, dass** die Löcher (12) entlang Linien ausgerichtet sind, die parallel zu einer Achse (X) der Längserstreckung der Basisschicht (11) sind.

3. Die Folie (10) gemäß Anspruch 2, **dadurch gekennzeichnet, dass** sie mit einer Vielzahl sich in Längsrichtung erstreckender Verstärkungen (13) versehen ist, die parallel zu der Achse (X) der Längserstreckung der Basisschicht (11) sind.

4. Die Folie gemäß Anspruch 2, **dadurch gekennzeichnet, dass** die Löcher zwischen einer der Linien und der nächsten der Linien versetzt sind.

5. Die Folie (10) gemäß Anspruch 3, **dadurch gekennzeichnet, dass** die Verstärkungen (13) ausgebildet sind, um mit Hilfe lokalisierter Konvektion und anschließender Stauchung und/oder Kompression von Material direkt aus der Basisschicht (11) geformt zu werden.

6. Ein Verfahren zur Bereitstellung einer Folie (10), die eine Basisschicht (11) umfasst, welche mit einer Vielzahl von Verstärkungen (13) versehen ist, wobei das Verfahren folgende Schritte umfasst:
- das Bereitstellen einer Vielzahl von Längsschnitten (14) in der Basisschicht (11) entlang mindestens einer Linie (L1, L2),
- das seitliche Verformen der Basisschicht (11) mit den Schnitten (14) durch Konvektion in mindestens einem begrenzten Bereich (Z) der Basisschicht (11), wobei die mindestens eine Linie (L1, L2) in dem mindestens einen Bereich (Z) angeordnet ist, wobei die Schnitte (14) verbreitert werden, bis die Löcher (12) geformt sind; wobei das Verfahren durch folgende Schritte gekennzeichnet ist:
- das Verformen der Basisschicht (11) in dem mindestens einen Bereich (Z) als Effekt der Konvektion, wodurch im Wesentlichen mindestens eine Einbuchtung (19) geformt wird, die sich in dem mindestens einen Bereich (Z) in Längsrichtung erstreckt, wobei die mindestens eine Einbuchtung (19) im transversalen Querschnitt im Wesentlichen U-förmig ist mit
- einem Kern (20), an dem sich die Löcher (12) erstrecken,
- zwei gegenüberliegenden Flügeln (21a, 21b), die im Wesentlichen senkrecht zu dem Kern (20) sind; und
- dem Bereitstellen der Verstärkungen (13) durch Zusammenstauchen und/oder -komprimieren der zwei Flügel (21a, 21b), und zum Teil des Kerns (20), der mindestens einen Einbuchtung (19), um sie im Wesentlichen auf die Ebene der Basisschicht (11) und koplanar damit zurückkehren zu lassen.

7. Das Verfahren gemäß Anspruch 6, **dadurch gekennzeichnet, dass** die Basisschicht (11) an der mindestens einen Einbuchtung (19) lokal dünner wird, während ihr Gesamtquerschnitt im Wesentlichen unverändert bleibt.

8. Das Verfahren gemäß Anspruch 6, **gekennzeichnet durch** folgenden Schritt:
Bereitstellen der Verstärkungen (13) durch Falten/Stauchen eines länglichen Abschnitts der Basisschicht (11) außerhalb des mindestens einen Bereichs (Z).

9. Ein Verfahren zum Bereitstellen einer Folie (10), die eine Basisschicht (11), versehen mit einer Vielzahl von Verstärkungen (13), umfasst, **dadurch gekennzeichnet, dass** es folgende Schritte umfasst:
- das lokale Verformen der Basisschicht (11) durch Konvektion in zumindest einem begrenzten Bereich (Z) davon,
- das gleichzeitige Verformen der Basisschicht (11) in dem mindestens einen Bereich (Z) als Effekt der Konvektion, wodurch im Wesentlichen mindestens eine Einbuchtung (19) geformt wird, die sich in dem mindestens einen Bereich (Z) in Längsrichtung erstreckt, wobei die mindestens eine Einbuchtung (19) einen im Wesentlichen U-förmigen transversalen Querschnitt hat mit
- einem Kern (20),
- zwei gegenüberliegenden Flügeln (21a, 21b), die im Wesentlichen senkrecht zu dem Kern (20) sind,
- das Bereitstellen der Verstärkungen (13) durch Zusammenstauchen und/oder -komprimieren und/oder -falten der beiden Flügel (21a, 21b) und teilweise des Kerns (20) der mindestens einen Einbuchtung (19), um sie im Wesentlichen auf die Ebene der Basisschicht (11) und koplanar damit zurückkehren zu lassen.

10. Das Verfahren gemäß Anspruch 9, **dadurch gekennzeichnet, dass** die Basisschicht (11) an der mindestens einen Einbuchtung (19) lokal dünner wird, während ihr Gesamtquerschnitt im Wesentlichen unverändert bleibt.

11. Das Verfahren zur Bereitstellung einer Folie (10) gemäß einem oder mehreren der Ansprüche 6 bis 8 oder gemäß Anspruch 9, **dadurch gekennzeichnet, dass** es einen Schritt der Bereitstellung der Verstärkungen (13) umfasst:
- direkt auf der Basisschicht (11), durch durchgehendes Verformen und anschließendes Komprimieren einiger Bereiche (Z) in der Längsrichtung der Basisschicht (11),
- und/oder durch Anbringen von Verstärkungsstreifen und/oder Filamenten, die separat bereitgestellt sind.

## Revendications

1. Film (10) destiné à fournir des matériaux d'emballage, qui comprend une feuille de base (11) pourvue d'une pluralité de trous (12), où lesdits trous (12) ont des bords périphériques, lesdits trous (12) étant configurés pour être obtenus par l'utilisation d'air chaud par convection sur des découpes longitudinales correspondantes (14) où les bords périphériques des trous (12) comprennent des parties courbes et des parties longitudinales positionnées entre les parties courbes, **caractérisé en ce que** les parties courbes ont une épaisseur réduite comprise sensiblement entre 5 % et 90 % par rapport à l'épaisseur de la feuille de base de départ (11) et les parties longitudinales ont une variation d'épaisseur
sensiblement comprise entre -50 % et +200 % par rapport à l'épaisseur de la feuille de base de départ (11).

2. Le film (10) selon la revendication 1, **caractérisé en ce que** lesdits trous (12) sont alignés le long de lignes qui sont parallèles à un axe (X) d'extension longitudinale de ladite feuille de base (11).

3. Le film (10) selon la revendication 2, **caractérisé en ce qu'**il est muni d'une pluralité de renforts (13) s'étendant longitudinalement qui sont parallèles audit axe (X) d'extension longitudinale de ladite feuille de base (11).

4. Le film selon la revendication 2, **caractérisé en ce que** lesdits trous sont décalés entre l'une desdites lignes et la ligne suivante parmi lesdites lignes.

5. Film (10) selon la revendication 3, **caractérisé en ce que** lesdits renforts (13) sont configurés pour être obtenus directement à partir de ladite feuille de base (11) au moyen d'une convection localisée et d'un rassemblement et/ou d'une compression subséquents du matériau.

6. Procédé pour fournir un film (10) comprenant une feuille de base (11) pourvue d'une pluralité de renforts (13), où le procédé comprend les étapes consistant à :
- réaliser une pluralité de découpes longitudinales (14) sur ladite feuille de base (11) le long d'au moins une ligne (LI, L2),
- déformer localement ladite feuille de base (11) avec lesdites découpes (14), par convection, dans au moins une région délimitée (Z) de ladite feuille de base (11), ladite au moins une ligne (LI, L2) étant disposée au niveau de ladite au moins une région (Z), élargir lesdites découpes (14) jusqu'à obtenir lesdits trous (12), le procédé étant **caractérisé par** les étapes consistant à
- déformer ladite feuille de base (11) au niveau de ladite au moins une région (Z), sous l'effet de ladite convection, formant ainsi sensiblement au moins un renflement (19) qui s'étend longitudinalement au niveau de ladite au moins une région (Z), ledit au moins un renflement (19) étant sensiblement en forme de U en section transversale avec :
- un noyau (20), au niveau duquel lesdits trous (12) s'étendent,
- deux ailes opposées (21a, 21b), qui sont sensiblement perpendiculaires audit noyau (20), et
- fournissant lesdits renforts (13) en rassemblant et/ou en comprimant sur elles-mêmes lesdites deux ailes (21a, 21b), et en partie ledit noyau (20), dudit au moins un renflement (19), de manière à les ramener sensiblement au niveau de ladite feuille de base (11) et dans le même plan que celle-ci.

7. Procédé selon la revendication 6, **caractérisé en ce que**, au niveau dudit au moins un renflement (19), ladite feuille de base (11) devient localement plus mince, tout en conservant sa dimension transversale globale sensiblement inchangée.

8. Procédé selon la revendication 6, **caractérisé par** l'étape consistant à :
fournir lesdits renforts (13) en pliant/rassemblant une partie longitudinale de ladite feuille de base (11) à l'extérieur de ladite au moins une région (Z).

9. Procédé pour fournir un film (10) comprenant une feuille de base (11) pourvue d'une pluralité de renforts (13), **caractérisé en ce qu'**il comprend les étapes consistant à :
- déformer localement ladite feuille de base (11) par convection au moins dans une région délimitée (Z) de celle-ci,
- simultanément, déformer ladite feuille de base (11) au niveau de ladite au moins une région (Z), sous l'effet de ladite convection, formant ainsi sensiblement au moins un renflement (19) qui s'étend longitudinalement au niveau de ladite au moins une région (Z), ledit au moins un renflement (19) étant sensiblement en forme de U en section transversale avec :
- un noyau (20),
- deux ailes opposées (21a, 21b), qui sont sensiblement perpendiculaires audit noyau (20),
- fournissant lesdits renforts (13) en rassemblant et/ou en comprimant et/ou en repliant sur elles-mêmes lesdites deux ailes (21a, 21b) et partiellement ledit noyau (20) dudit au moins un renflement (19), de manière à les ramener sensiblement au niveau de ladite feuille de base (11) et dans le même plan que celle-ci.

10. Procédé selon la revendication 9, **caractérisé en ce que**, au niveau dudit au moins un renflement (19), ladite feuille de base (11) devient localement plus mince, tout en conservant sa dimension transversale globale sensiblement inchangée.

11. Procédé pour fournir un film (10) selon une ou plusieurs des revendications 6 à 8, ou selon la revendication 9, **caractérisé en ce qu'**il comprend une étape consistant à fournir les renforts (13) :
- directement sur ladite feuille de base (11), en déformant de manière continue puis en comprimant certaines régions (Z) dans la direction longitudinale de ladite feuille de base (11),
- et/ou en appliquant des bandes et/ou des filaments de renfort, qui sont fournis séparément.
